# EUROPÄISCHE PATENTSCHRIFT

(11) **EP 3 391 400 B1**
(45) Veröffentlichungstag und Bekanntmachung des Hinweises auf die Patenterteilung: **20.11.2019**
(21) Anmeldenummer: 16816629.6
(22) Anmeldetag: 13.12.2016
(51) Int. Cl.: B60R 16/00, H01H 21/04, H01H 21/24, H01H 21/40, H01H 21/22, H01H 21/50

(54) **ELEKTRISCHER SCHALTER**
ELECTRICAL SWITCH
COMMUTATEUR ÉLECTRIQUE

(30) Priorität: 14.12.2015 DE 102015016128
(43) Veröffentlichungstag der Anmeldung: 24.10.2018
(73) Patentinhaber: Marquardt GmbH, 78604 Rietheim-Weilheim (DE)
(72) Erfinder: WEH, Claus, 78532 Tuttlingen (DE); BANTEL, Regina, 71149 Bondorf (DE)
(74) Vertreter: Otten, Roth, Dobler & Partner mbB Patentanwälte
(86) Internationale Anmeldenummer: PCT/EP2016/080776
(87) Internationale Veröffentlichungsnummer: WO 2017/102716

(56) Entgegenhaltungen:
- EP-A1- 2 468 590
- WO-A1-2015/036911
- DE-A1-102004 036 844
- US-A1- 2010 258 424

## Beschreibung

Die Erfindung betrifft einen elektrischen Schalter nach dem Oberbegriff des Patentanspruchs 1.

Derartige elektrische Schalter werden beispielsweise als Bedienschalter in Kraftfahrzeugen eingesetzt. Insbesondere kann der Schalter zur Bedienung einer elektrischen Parkbremse im Kraftfahrzeug durch einen Benutzer Verwendung finden.

Ein solcher, aus der WO 2015/036911 A1 bekannter elektrischer Schalter besitzt ein aus einer Ruhelage in eine Schaltstellung bewegbares Betätigungsorgan, das vom Benutzer zur Bedienung der elektrischen Parkbremse manuell bewegt wird. Das Betätigungsorgan kann in der Art einer Wippe ausgestaltet sein. Der Schalter umfasst ein Kontaktsystem, wobei das Betätigungsorgan bei dessen Bewegung in die Schaltstellung schaltend mit dem Kontaktsystem zusammenwirkt. Das Betätigungsorgan wirkt über ein mit einer elastischen Kraft belastetes Betätigungselement mit einer Kulisse in der Art einer Schaltkulisse zur Erzeugung einer Rückstellkraft bei Bewegung des Betätigungsorgans aus der Ruhelage zusammen. Dadurch wird das Betätigungsorgan nach der Bedienung durch den Benutzer von selbst in dessen Ruhelage zurückgeführt.

Bei diesem Schalter ist eine weitere Kulisse in der Art einer Schaltkulisse vorgesehen. Desweiteren ist am Betätigungsorgan ein weiteres Betätigungselement für die weitere Kulisse angeordnet, derart dass jedes der beiden Betätigungselemente mit der jeweiligen Kulisse in der Ruhelage und/oder bei Bewegung des Betätigungsorgans aus der Ruhelage zusammenwirkt. Die Kulisse weist eine ansteigende Flanke auf und umfasst eine im Wesentlichen ebene Bahn, wobei die ebene Bahn eine geringere Steigung als die ansteigende Flanke besitzt. Es hat sich herausgestellt, dass bei der Rückstellung des Betätigungsorgans in die Ruhelage Geräusche auftreten, die vom Benutzer als unangenehm empfunden werden können. Desweiteren können auch Mängel in der Exaktheit der Rückstellung in die Ruhelage auftreten.

Weitere solche elektrische Schalter mit einer Schaltkulisse sind in der EP 2 468 590 A1 und in der DE 10 2004 036 844 A1 beschrieben. Eine weitere elektrische Schalteranordnung ist in der US 2010/258424 A1 gezeigt.

Der Erfindung liegt die Aufgabe zugrunde, den Schalter derart weiterzuentwickeln, dass das Schaltgeräusch verringert ist. Insbesondere soll auch das Spiel des Betätigungsorgans in der Ruhestellung verringert sein.

Diese Aufgabe wird bei einem gattungsgemäßen elektrischen Schalter durch die kennzeichnenden Merkmale des Anspruchs 1 gelöst.

Beim erfindungsgemäßen elektrischen Schalter geht die ansteigende Flanke der Kulisse in eine flachere Flanke sowie anschließend in eine steilere Flanke über. Insbesondere ist dadurch in der der flacheren Flanke zugeordneten Schaltstellung eine verringerte Rückstellkraft erzeugt. Weitere Ausgestaltungen der Erfindung sind Gegenstand der Unteransprüche.

In weiterer Ausgestaltung kann in ergonomischer Art und Weise das Betätigungsorgan in zwei einander entgegen gesetzten Richtungen, insbesondere durch Ziehen und/oder Drücken, ausgehend von der Ruhelage zu dessen Betätigung bewegbar sein. Die beiden Kulissen können zueinander gegenläufig ausgebildet sein, derart dass sich bei Bewegung in den beiden Richtungen, insbesondere beim Ziehen sowie beim Drücken, des Betätigungsorgans vergleichbare Kraft-Weg-Kennlinien mit positiven und/oder negativen Kraftwerten für das Betätigungsorgan ergeben. Besonders bevorzugt ist, dass die beiden Kulissen in Bezug auf die Ruhelage spiegelsymmetrisch zueinander ausgebildet sind. Eine derartige Ausgestaltung stellt eine stabile Ruhelage mit geringem Spiel sicher.

Das Betätigungselement kann einen in Bezug auf das Betätigungsorgan beweglich angeordneten Zapfen sowie ein an der dem Betätigungsorgan gegenüberliegenden Seite, am Zapfen drehbar gelagertes Bewegungselement umfassen. Bei dem Bewegungselement kann es sich um eine Rolle, eine Kugel o. dgl. handeln, so dass lediglich geringe Reibungskräfte bei der Bewegung des Betätigungsorgans auftreten. Das Bewegungselement kann mittels der elastischen Kraft an der Kulisse anliegen. Die elastische Kraft kann von einer am Zapfen angeordneten Druckfeder erzeugt werden. Dadurch ist eine funktionssichere sowie verschleißarme Ausgestaltung mit guter Haptik geschaffen.

Zwecks weiterer Verringerung des Spiels für die Ruhelage sowie zwecks besonderer Stabilität der Ruhelage des Betätigungsorgans kann jeweils eine der ansteigenden Flanken der beiden einzelnen Kulissen genutzt werden. Insbesondere kann es sich hierfür anbieten, dass das jeweilige Bewegungselement an der jeweiligen ansteigenden Flanke anliegt.

In weiterer zweckmäßiger Ausgestaltung kann die ebene Bahn der ansteigenden Flanke gegenüberliegend in eine wiederum steile Flanke übergehen. Zwecks geringer Geräuschentwicklung beim Bewegen des Betätigungsorgans können die Übergänge zwischen der ebenen Bahn sowie der Flanken jeweils gerundet ausgebildet sein. Die Rundung kann bevorzugterweise einen Radius besitzen, der größer als der Radius des Bewegungselements ist. Die beiden Kulissen können in etwa in Bezug auf die Mitte der ebenen Bahn zueinander spiegelbildlich angeordnet sein.

Zum Schutz gegen äußere Einflüsse kann für den Schalter ein Gehäuse vorgesehen sein. Zweckmäßigerweise kann das Betätigungsorgan in und/oder am Gehäuse bewegbar gelagert sein. Das Betätigungsorgan kann wiederum mittels eines Stößels, eines Ansatzes o. dgl. in der Schaltstellung auf das Kontaktsystem schaltend einwirken.

In kompakter Art und Weise kann das Kontaktsystem auf einer Leiterplatte angeordnet sein. Die Leiterplatte kann im Gehäuse befindlich sein. Des Weiteren kann ein elektrischer Steckanschluss an der Leiterplatte zur Weiterleitung der beim Schalten des Kontaktsystems erzeugten Schaltsignale angeordnet sein. Zweckmäßigerweise kann der Steckanschluss aus dem Gehäuse für den Anschluss eines Steckers herausragen.

In einer einfachen Ausgestaltung kann das Kontaktsystem wenigstens eine Kontaktfläche auf der Leiterplatte als Festkontakt sowie einen mit dem Festkontakt zusammenwirkenden Schaltkontakt umfassen. In kostengünstiger Art kann der Schaltkontakt in der Art einer Schaltmatte ausgestaltet sein. Das Kontaktsystem kann auch in der Art eines Schaltelements, beispielsweise als ein Mikroschalter, ein Schnappschalter o. dgl., ausgestaltet sein. Das Schaltelement kann in einfacher Art und Weise auf der Leiterplatte angeordnet sein.

Für eine besonders bevorzugte Ausgestaltung des erfindungsgemäßen Schalters ist nachfolgendes festzustellen.

Bei bekannten Systemen verhalten sich die stabile Ruhelage, also die Vorspannung für das Betätigungsorgan, und angenehme Schaltgeräusche gegensätzlich. Die Herausforderung besteht darin, neben einem geringen Null-Lagenspiel der Schaltwippe auch eine geringe bzw. angenehme Geräuschbildung zu realisieren.

Geringe bzw. angenehme Schaltgeräusche bei stabiler Ruhelage, d.h. bei Vorspannung in der Null-Lage, der Schaltwippe werden durch das Zusammenwirken von mindestens zwei Einzelkulissen und zwei Betätigern erzeugt. Im speziellen Fall wirken zwei unsymmetrisch ausgelegte und gegeneinander gedrehte Kulissen in der Art zusammen, dass sich für Ziehen und/oder Drücken der Schaltwippe vergleichbare Kraft-Weg-Kennlinien mit positiven und negativen Kraftwerten ergeben.

Für eine stabile Ruhelage des Betätigungsorgans, also beispielsweise für die Null-Lage der Wippe, wird jeweils eine Flanke der zwei einzelnen Kulissen genutzt. Und zwar im speziellen Fall jeweils die ansteigende Flanke. Die Winkel, welche beim Rücklauf die Gegenflanke darstellen, sind neben dem Werkstoff der Kulisse und des Betätigers, der eine Rolle umfassen kann, für die Geräuschentwicklung verantwortlich. Diese Winkel können bei der beschriebenen Anordnung deutlich größer als bei den bekannten symmetrischen Kulissengeometrien ausgelegt werden. Der Winkel und/oder der Übergang nahe der Ruhelage können mit einem Radius, welcher größer als die Betätigerkontur bzw. der Betätigerradius ist, also im speziellen Fall größer als der Rollendurchmesser, ohne Nachteile für die stabile Ruhelage versehen werden. Dies führt insgesamt zu einer harmonischen Kulissenkontur, welche eine geringere bzw. angenehmere Geräuschentwicklung beim Betätigen und/oder besonders beim Rückstellen bzw. Loslassen des Betätigungsorgans zur Folge hat.

Geschaffen ist somit ein Schalter für eine elektronische Park-Bremse (EPB) mit einer Schaltkulisse, welche eine stabile Ruhelage bei geringen Schaltgeräuschen ermöglicht.

Die mit der Erfindung erzielten Vorteile bestehen insbesondere darin, dass eine geringere bzw. angenehmere Geräuschentwicklung beim Betätigen und/oder beim Loslassen des Betätigungsorgans durch den Benutzer auftritt. Des Weiteren ist eine stabile Ruhelage des Betätigungsorgans sowie eine verbesserte Haptik für den Benutzer bei Betätigung des Betätigungsorgans gegeben.

In vorteilhafter Weise werden beim erfindungsgemäßen Schalter geringe Schaltgeräusche sowie eine stabile Ruhelage bzw. Null-Lage für das Betätigungsorgan durch das Zusammenwirken von zwei einzelnen, unsymmetrischen Kulissen mit dem Betätigungsorgan erzielt. Der Winkel zwischen der ansteigenden Flanke und der ebenen Bahn, welcher für die Geräuschentwicklung ursächlich ist, kann bei der erfindungsgemäßen Ausgestaltung deutlich größer als bei der bisherigen symmetrischen, in etwa V-förmig ausgestalteten Kulissengeometrie gewählt werden. Dies ermöglicht eine geringere und/oder angenehmere Geräuschentwicklung beim Betätigen des Betätigungsorgans und/oder bei der Rückstellung des Betätigungsorgans. Dieser Winkel, welcher auch für Ruhelage ursächlich ist, kann mit einem Radius ausgestaltet werden, welcher größer als der Radius der Kontur des Bewegungselements ist, was einen harmonischen Übergang mit besserer und/oder angenehmerer Geräuschentwicklung bewirkt. Durch das Zusammenwirken der zwei einzelnen, unsymmetrischen Kulissen kann eine stabile Ruhelage des Betätigungsorgans realisiert werden, wozu die unterschiedlichen Wirkungsrichtungen der beiden Kulissen in der Ruhelage genutzt werden.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen Längsschnitt durch einen elektrischen Schalter
- Fig. 2: einen Detailausschnitt des Schalters aus Fig. 1 in perspektivischer Ansicht,
- Fig. 3: den Detailausschnitt aus Fig. 2 im Längsschnitt,
- Fig. 4: einen weiteren Detailausschnitt aus Fig. 3 und
- Fig. 5: ein Kraft-Weg-Diagramm für die Betätigung des Schalters aus Fig. 1.

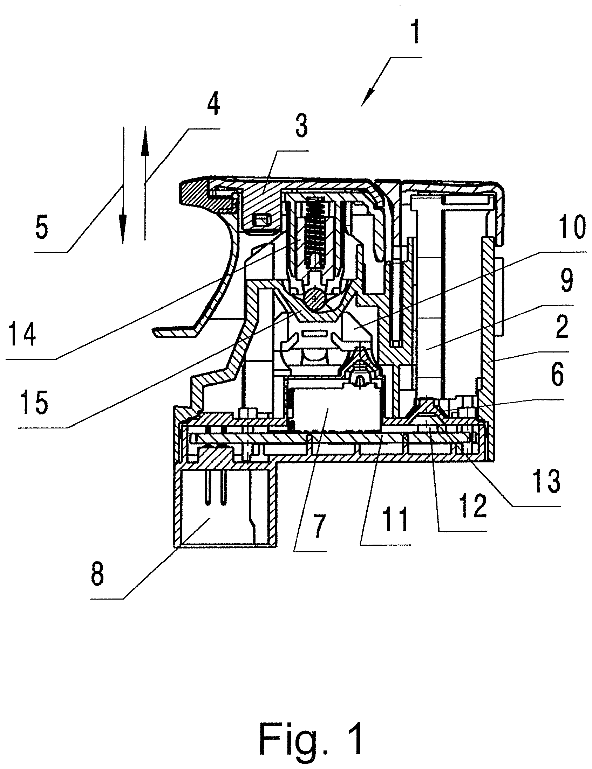

In Fig. 1 ist ein elektrischer Schalter 1 zu sehen, der in einem Kraftfahrzeug zur Bedienung einer elektrischen Parkbremse durch einen Benutzer dient. Der Schalter 1 weist ein Gehäuse 2 auf, an dem ein Betätigungsorgan 3 bewegbar gelagert ist. Das in der Art einer Wippe ausgestaltete Betätigungsorgan 3 ist ausgehend von der in Fig. 1 gezeigten Ruhelage vom Benutzer manuell in zwei einander entgegen gesetzte Richtungen in eine jeweilige Schaltstellung bewegbar. Und zwar ist das Betätigungsorgan 3 durch Ziehen und/oder Drücken vom Benutzer manuell zu dessen Betätigung bewegbar, vorliegend durch Ziehen in Richtung 4 sowie durch Drücken in Richtung 5.

Im Gehäuse 2 befindet sich ein Kontaktsystem 6, 7. Das Betätigungsorgan 3 wirkt in der Schaltstellung schaltend mit dem Kontaktsystem 6, 7 mittels eines Stößels 9, Ansatzes 10 o. dgl. zusammen, so dass das eine der beiden Kontaktsysteme 6, 7 beim Ziehen des Betätigungsorgans 3 sowie das andere der beiden Kontaktsysteme 6, 7 beim Drücken des Betätigungsorgans 3 betätigt wird. Dabei erzeugt dann das jeweilige betätigte Kontaktsystem 6, 7 ein Schaltsignal, das wiederum zur Ansteuerung der jeweiligen Funktionen der elektronischen Parkbremse dient. Die Schalt- und/oder Steuersignale für die elektronische Parkbremse werden über einen elektrischen Steckanschluss 8, der am Gehäuse 2 für den Anschluss eines Steckers herausragt, weitergeleitet. Der Steckanschluss 8 sowie das Kontaktsystem 6, 7 sind auf einer im Gehäuse 2 befindlichen Leiterplatte 11 angeordnet. Das Kontaktsystem 6 umfasst wenigstens eine Kontaktfläche 12 auf der Leiterplatte 11 als Festkontakt sowie einen mit dem Festkontakt 12 zusammenwirkenden, in der Art einer Schaltmatte ausgestalteten Schaltkontakt 13. Das weitere Kontaktsystem 7 besteht aus einem elektrischen Schaltelement, insbesondere einem Mikroschalter, einem Schnappschalter o. dgl., wobei das Schaltelement 7 auf der Leiterplatte 11 angeordnet ist.

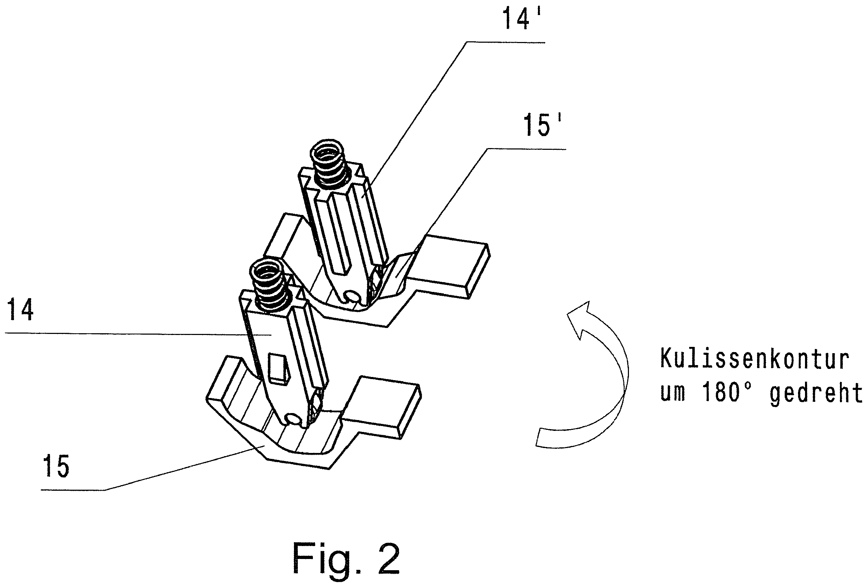

Das Betätigungsorgan 3 wirkt über ein mit einer elastischen Kraft belastetes Betätigungselement 14 mit einer mit einer im Gehäuse 2 befindlichen Kulisse 15 in der Art einer Schaltkulisse zur Erzeugung einer Rückstellkraft bei Bewegung des Betätigungsorgans 3 aus der Ruhelage zusammen. Es ist nun bei dem erfindungsgemäßen Schalter 1 eine weitere Kulisse 15' in der Art einer Schaltkulisse vorgesehen, wie in Fig. 2 zu sehen ist. Am Betätigungsorgan 3 ist ein weiteres Betätigungselement 14' für die weitere Kulisse 15' angeordnet, derart dass jedes der beiden Betätigungselemente 14, 14' mit der jeweiligen Kulisse 15, 15' in der Ruhelage und/oder bei Bewegung des Betätigungsorgans 3 aus der Ruhelage zusammenwirkt, wie man ebenfalls anhand der Fig. 2 erkennt. Die Kulissen 15, 15' sowie die zugehörigen Betätigungselemente 14, 14' sind dabei hintereinander im Gehäuse 2 angeordnet.

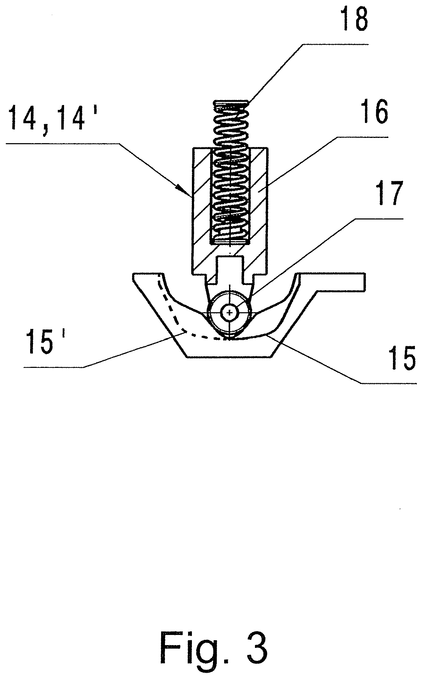

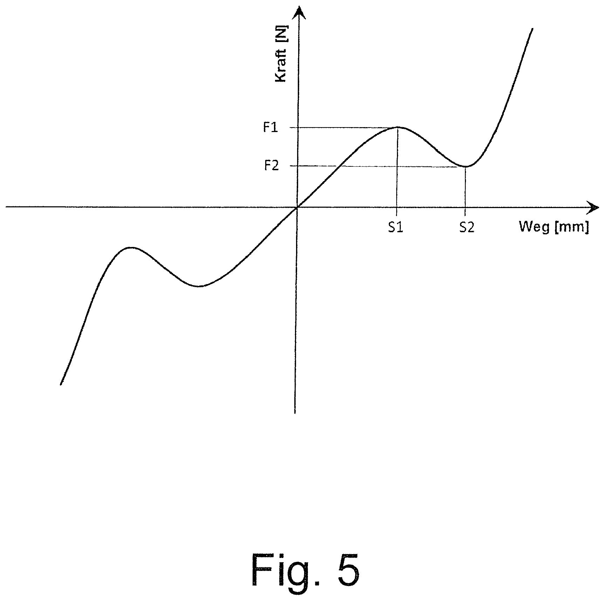

Wie man weiter in Fig. 2 sieht, sind die beiden Schaltkulissen 15, 15' zueinander gegenläufig ausgebildet, und zwar derart dass die Kulissenkontur der einen Schaltkulisse 15 um in etwa 180° gedreht gegenüber der anderen Schaltkulisse 15' erscheint. Insbesondere sind die beiden Schaltkulissen 15, 15' in Bezug auf die Ruhelage spiegelsymmetrisch zueinander ausgebildet, wie man anhand von Fig. 3 sieht, wo die eine Schaltkulisse 15 mit durchgezogenen Linien sowie die andere, dahinter angeordnete Schaltkulisse 15' mit gestrichelten Linien eingezeichnet ist. Dadurch ergeben sich bei Bewegung des Betätigungsorgans 3 in den beiden Richtungen, also insbesondere beim Ziehen sowie beim Drücken der Schaltwippe 3, gemäß Fig. 5 vergleichbare Kraft-Weg-Kennlinien mit positiven und/oder negativen Kraftwerten für das Betätigungsorgan 3.

Das Betätigungselement 14, 14' umfasst einen in Bezug auf das Betätigungsorgan 3 beweglich angeordneten Zapfen 16 sowie ein an der dem Betätigungsorgan 3 gegenüberliegenden Seite, am Zapfen 16 drehbar gelagertes Bewegungselement 17, wie man der Fig. 3 entnehmen kann. Bei dem Bewegungselement 17 kann es sich um eine Rolle, eine Kugel o. dgl. handeln. Das Bewegungselement 17 liegt mittels der elastischen Kraft an der Schaltkulisse 15, 15' an. Die elastische Kraft wird dabei von einer am Zapfen 16 angeordneten Druckfeder 18 erzeugt.

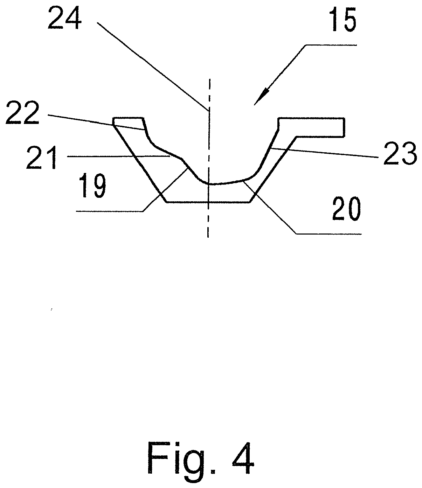

Wie man weiter in Fig. 4 sieht, weist die Schaltkulisse 15 eine ansteigende Flanke 19 auf. Des Weiteren umfasst die Schaltkulisse 15 eine im wesentlichen ebene Bahn 20, die eine geringere Steigung als die ansteigende Flanke 19 besitzt. An der der ebenen Bahn 20 abgewandten Seite geht die ansteigende Flanke 19 der Kulisse 15 in eine flachere Flanke 21 sowie anschließend in eine steilere Flanke 22 über. Und zwar derart, dass in der der flacheren Flanke 21 zugeordneten Schaltstellung eine verringerte Rückstellkraft erzeugt ist, wie anhand des Rückgangs der Rückstellkraft von Fi auf F₂ in der Schaltstellung zwischen dem Weg s₁ und s₂ für das Betätigungsorgan 3 gemäß Fig. 5 zu erkennen ist. Eine weitere Bewegung des Betätigungsorgans 3 über die Schaltstellung hinaus wird durch die von der steileren Flanke 22 bewirkte stark ansteigende Rückstellkraft verhindert. Weiterhin geht die ebene Bahn 20 an der der ansteigenden Flanke 19 gegenüber liegenden Seite in eine wiederum steile Flanke 23 über, womit die Bewegung des Betätigungsorgans 3 in die zur jeweiligen Schaltstellung entgegen gesetzte Richtung begrenzt ist.

Die weitere Schaltkulisse 15' ist ebenso wie die Kulisse 15 ausgestaltet, jedoch sind wie bereits erwähnt die beiden Kulissen 15, 15' in etwa in Bezug auf die Mitte der ebenen Bahn 20 entlang der in Fig. 4 eingezeichneten Symmetrielinie 24 zueinander spiegelbildlich angeordnet, wie anhand der Fig. 2 zu erkennen ist. Für die Ruhelage bzw. Null-Lage des Betätigungsorgans 3 wird gemäß Fig. 3 jeweils eine der Flanken 19 der beiden einzelnen Schaltkulissen 15, 15' genutzt, und zwar indem das jeweilige Bewegungselement 17 an der jeweiligen ansteigenden Flanke 19 anliegt. Dadurch dass folglich in der Ruhelage sowohl das Bewegungselement 20 des Betätigungselements 14 an der ansteigenden Flanke 19 in der Kulisse 15 als auch des Bewegungselement 20 des Betätigungselements 14' an der ansteigenden Flanke 19 in der Kulisse 15' anliegen, wird eine besonders stabile Ruhelage erzielt. Die Übergang zwischen der ebenen Bahn 20 und der ansteigenden Flanke 19 sowie der steilen Flanke 23 und die weiteren Übergänge zwischen den Flanken 19, 21, 22 sind jeweils gerundet sind, wodurch eine lediglich geringe Geräuschentwicklung beim Bewegen des Betätigungsorgans 3 auftritt.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. Der Schalter eignet sich besonders für die Bedienung einer elektrischen / elektronischen Park-Bremse im Kraftfahrzeug. Selbstverständlich können auch sonstige Schalter mit einer Schaltwippe, welche eine Kombination von Kulisse sowie Betätiger und/oder Rolle benutzt, in vorteilhafter Weise erfindungsgemäß ausgestaltet werden.

### Bezugszeichen-Liste:

- 1:: (elektrischer) Schalter
- 2:: Gehäuse
- 3:: Betätigungsorgan / Schaltwippe
- 4,5:: Richtung (für die Bewegung des Betätigungsorgans)
- 6,7:: Kontaktsystem / Schaltelement
- 8:: (elektrischer) Steckanschluss
- 9:: Stößel
- 10:: Ansatz
- 11:: Leiterplatte
- 12:: Kontaktfläche / Festkontakt
- 13:: Schaltkontakt
- 14,14':: Betätigungselement
- 15,15':: Kulisse / Schaltkulisse
- 16:: Zapfen
- 17:: Bewegungselement
- 18:: Druckfeder
- 19:: (ansteigende) Flanke (von Schaltkulisse)
- 20:: ebene Bahn (von Schaltkulisse)
- 21:: (flachere) Flanke (von Schaltkulisse)
- 22:: (steilere) Flanke (von Schaltkulisse)
- 23:: (steile) Flanke (von Schaltkulisse)
- 24:: Symmetrielinie

## Patentansprüche

1. Elektrischer Schalter, insbesondere für ein Kraftfahrzeug, wie für eine elektrische Parkbremse im Kraftfahrzeug, mit einem aus einer Ruhelage in eine Schaltstellung bewegbaren Betätigungsorgan (3) in der Art einer Wippe, und mit einem Kontaktsystem (6, 7), wobei das Betätigungsorgan (3) in der Schaltstellung schaltend mit dem Kontaktsystem (6, 7) zusammenwirkt, und wobei das Betätigungsorgan (3) über ein mit einer elastischen Kraft belastetes Betätigungselement (14) mit einer Kulisse (15) in der Art einer Schaltkulisse zur Erzeugung einer Rückstellkraft bei Bewegung des Betätigungsorgans (3) aus der Ruhelage zusammenwirkt, wobei eine weitere Kulisse (15') in der Art einer Schaltkulisse vorgesehen ist, wobei am Betätigungsorgan (3) ein weiteres Betätigungselement (14') für die weitere Kulisse (15') angeordnet ist, derart dass jedes der beiden Betätigungselemente (14, 14') mit der jeweiligen Kulisse (15, 15') in der Ruhelage und/oder bei Bewegung des Betätigungsorgans (3) aus der Ruhelage zusammenwirkt, und wobei die Kulisse (15, 15') eine ansteigende Flanke (19) sowie eine im wesentlichen ebene Bahn (20), die eine geringere Steigung als die ansteigende Flanke (19) besitzt, umfasst, **dadurch gekennzeichnet, dass** die ansteigende Flanke (19) der Kulisse (15, 15') in eine flachere Flanke (21) sowie anschließend in eine steilere Flanke (22) übergeht, derart dass in der der flacheren Flanke (21) zugeordneten Schaltstellung eine verringerte Rückstellkraft erzeugt ist.

2. Elektrischer Schalter nach Anspruch 1, **dadurch gekennzeichnet, dass** das Betätigungsorgan (3) in zwei einander entgegen gesetzten Richtungen (4, 5), insbesondere durch Ziehen und/oder Drücken, ausgehend von der Ruhelage zu dessen Betätigung bewegbar ist, und dass vorzugsweise die beiden Kulissen (15, 15') zueinander gegenläufig, insbesondere spiegelsymmetrisch zueinander, ausgebildet sind, derart dass sich bei Bewegung in den beiden Richtungen (4, 5), insbesondere beim Ziehen sowie beim Drücken, des Betätigungsorgans (3) vergleichbare Kraft-Weg-Kennlinien mit positiven und/oder negativen Kraftwerten für das Betätigungsorgan (3) ergeben.

3. Elektrischer Schalter nach Anspruch 1 oder 2, **dadurch gekennzeichnet, dass** das Betätigungselement (14, 14') einen in Bezug auf das Betätigungsorgan (3) beweglich angeordneten Zapfen (16) sowie ein an der dem Betätigungsorgan (3) gegenüberliegenden Seite, am Zapfen (16) drehbar gelagertes Bewegungselement (17), insbesondere eine Rolle, eine Kugel o. dgl., umfasst, dass vorzugsweise das Bewegungselement (17) mittels der elastischen Kraft an der Kulisse (15, 15') anliegt, und dass weiter vorzugsweise die elastische Kraft von einer am Zapfen (16) angeordneten Druckfeder (18) erzeugt wird.

4. Elektrischer Schalter nach Anspruch 1, 2 oder 3, **dadurch gekennzeichnet, dass** für die Ruhelage des Betätigungsorgans (3) jeweils eine der ansteigenden Flanken (19) der beiden einzelnen Kulissen (15, 15') genutzt wird, insbesondere indem das jeweilige Bewegungselement (17) an der jeweiligen ansteigenden Flanke (19) anliegt.

5. Elektrischer Schalter nach einem der Ansprüche 1 bis 4, **dadurch gekennzeichnet, dass** die ebene Bahn (20) der ansteigenden Flanke (19) gegenüberliegend in eine wiederum steile (23) Flanke übergeht, dass vorzugsweise die Übergänge zwischen der ebenen Bahn (20) sowie der Flanken (19, 21, 22, 23) jeweils gerundet sind, und dass weiter vorzugsweise die beiden Kulissen (15, 15') in etwa in Bezug auf die Mitte der ebenen Bahn (20) zueinander spiegelbildlich angeordnet sind.

6. Elektrischer Schalter nach einem der Ansprüche 1 bis 5, **dadurch gekennzeichnet, dass** ein Gehäuse (2) vorgesehen ist, dass vorzugsweise das Betätigungsorgan (3) in und/oder am Gehäuse (2) bewegbar gelagert ist, und dass weiter vorzugsweise das Betätigungsorgan (3) mittels eines Stößels (9), Ansatzes (10) o. dgl. in der Schaltstellung auf das Kontaktsystem (6, 7) schaltend einwirkt.

7. Elektrischer Schalter nach einem der Ansprüche 1 bis 6, **dadurch gekennzeichnet, dass** das Kontaktsystem (6, 7) auf einer Leiterplatte (11) angeordnet ist, dass vorzugsweise die Leiterplatte (11) im Gehäuse (2) befindlich ist, und dass weiter vorzugsweise ein elektrischer Steckanschluss (8) an der Leiterplatte (11) zur Weiterleitung der beim Schalten des Kontaktsystems (6, 7) erzeugten Schaltsignale angeordnet ist, wobei insbesondere der Steckanschluss (8) aus dem Gehäuse (2) für den Anschluss eines Steckers herausragt.

8. Elektrischer Schalter nach einem der Ansprüche 1 bis 7, **dadurch gekennzeichnet, dass** das Kontaktsystem (6) wenigstens eine Kontaktfläche (12) auf der Leiterplatte (11) als Festkontakt sowie einen mit dem Festkontakt (12) zusammenwirkenden Schaltkontakt (13), der insbesondere in der Art einer Schaltmatte ausgestaltet ist, umfasst und/oder ein auf der Leiterplatte (11) angeordnetes elektrisches Schaltelement (7), insbesondere einen Mikroschalter, einen Schnappschalter o. dgl., umfasst.

## Claims

1. An electrical switch, in particular for a motor vehicle, such as for an electric parking brake in the motor vehicle, comprising an actuating member (3) movable from a rest position into a switching position, in the form of a rocker, and comprising a contact system (6, 7), wherein the actuating member (3) in the switching position interacts with the contact system (6, 7) in a switching manner, and wherein the actuating member (3) interacts by means of an actuating element (14), which is loaded with an elastic force, with a track (15) in the form of a switching track for generating a return force when the actuating member (3) moves out of the rest position, wherein a further track (15') is provided in the form of a switching track, wherein a further actuating element (14') for the further track (15') is arranged on the actuating member (3) such that the two actuating elements (14, 14') each interact with the respective tracks (15, 15') in the rest position and/or when the actuating member (3) moves from the rest position, and wherein the track (15, 15') has a rising edge (19) and a substantially planar path (20) having a lower gradient than the rising edge (19), **characterised in that** the rising edge (19) of the track (15, 15') merges into a flatter edge (21) and then into a steeper edge (22) such that in the switching position associated with the flatter edge (21) a reduced return force is generated.

2. The electrical switch according to claim 1, **characterised in that** the actuating member (3) can be moved in two mutually opposing directions (4, 5), in particular by pulling and/or pushing, starting from the rest position for the operation thereof, and **in that** preferably the two tracks (15, 15') are designed counter to one another, in particular mirror-symmetrical with respect to one another, such that when moved in the two directions (4, 5), in particular when the actuating member (3) is pulled and pushed, comparable force-displacement characteristic curves having positive and/or negative force values for the actuating member (3) result.

3. The electrical switch according to claim 1 or 2, **characterised in that** the actuating element (14, 14') has a pin (16) which is movably arranged with respect to the actuating member (3) and a movement element (17), in particular a roller, a ball or the like, rotatably mounted on the pin (16) on the side opposite the actuating member (3), **in that** preferably the movement element (17) bears against the track (15, 15') by means of the elastic force, and **in that** further preferably the elastic force is generated from a compression spring (18) arranged on the pin (16).

4. The electrical switch according to claim 1, 2 or 3, **characterised in that** for the rest position of the actuating member (3) each one of the rising edges (19) of the two individual tracks (15, 15') is used, in particular **in that** the movement element (17) bears against the rising edge (19).

5. The electrical switch according to any one of claims 1 to 4, **characterised in that** the planar path (20) opposite the rising edge (19) merges into an again steep (23) edge, **in that** preferably the transitions between the planar path (20) and the edges (19, 21, 22, 23) are each rounded, and **in that** further preferably the two tracks (15, 15') are arranged as mirror images relative to one another with respect to the centre of the planar path (20).

6. The electrical switch according to any one of claims 1 to 5, **characterised in that** a housing (2) is provided, **in that** preferably the actuating member (3) is movably mounted in and/or on the housing (2), and **in that** further preferably in the switching position the actuating member (3) acts on the contact system (6, 7) in a switching manner by means of a tappet (9), a projection (10) or the like.

7. The electrical switch according to any one of claims 1 to 6, **characterised in that** the contact system (6, 7) is arranged on a printed circuit board (11), **in that** preferably the printed circuit board (11) is disposed in the housing (2), and **in that** further preferably an electrical plug connection (8) is arranged on the printed circuit board (11) for forwarding the switching signals generated during switching of the contact system (6, 7), wherein in particular the plug connection (8) protrudes from the housing (2) for the connection of a plug.

8. The electrical switch according to any one of claims 1 to 7, **characterised in that** the contact system (6) comprises at least one contact surface (12) on the printed circuit board (11) as a fixed contact and a switching contact (13) which interacts with the fixed contact (12) and which is in particular configured in the form of a switching mat, and/or comprises an electrical switching element (7), in particular a micro-switch, a snap-action switch or the like, arranged on the circuit board (11).

## Revendications

1. Commutateur électrique, en particulier pour véhicule automobile, tel qu'un frein de stationnement électrique dans un véhicule automobile, comprenant un organe d'actionnement (3) pouvant être déplacé d'une position de repos à une position de commutation, à la manière d'une bascule, et un système de contact (6, 7), l'organe d'actionnement (3) coopérant de manière commutant en position de commutation avec le système de contact (6, 7) et l'organe d'actionnement (3) coopérant avec une coulisse (15), de type coulisse de commutation, via un élément d'actionnement (14) soumis à une force élastique, pour générer une force de rappel pendant le mouvement de l'organe d'actionnement (3) depuis la position de repos, une autre coulisse (15') de type coulisse de commutation étant prévue, l'organe d'actionnement (3) étant équipé d'un autre élément d'actionnement (14') pour l'autre coulisse (15'), de telle sorte que chacun des deux éléments d'actionnement (14, 14') coopère avec la coulisse respective (15, 15') en position de repos et/ou lors du mouvement de l'organe d'actionnement (3) depuis la position de repos, et la coulisse (15, 15') comprenant un flanc montant (19) et une trajectoire sensiblement plane (20) ayant une pente plus faible que le flanc montant (19), **caractérisé en ce que** le flanc montant (19) de la coulisse (15, 15') devient un flanc plus plat (21), puis un flanc plus raide (22), de manière à générer une force de rappel réduite dans la position de commutation associée au flanc plus plat (21).

2. Commutateur électrique selon la revendication 1, **caractérisé en ce que** l'organe d'actionnement (3) peut être déplacé dans deux directions opposées l'une à l'autre (4, 5), en particulier par traction et/ou pression, à partir de la position de repos jusqu'à son actionnement, et de préférence, **en ce que** les deux coulisses (15, 15') sont conçues dans des directions opposées, en particulier de manière mutuellement symétrique, de telle sorte que lors du déplacement dans les deux directions (4, 5), en particulier lors de la traction et lors de la pression de l'organe d'actionnement (3), des caractéristiques de force-déplacement comparables soient générées avec des valeurs de force positives et/ou négatives pour l'organe d'actionnement (3).

3. Commutateur électrique selon la revendication 1 ou 2, **caractérisé en ce que** l'élément d'actionnement (14, 14') présente une broche (16) agencée de manière mobile par rapport à l'organe d'actionnement (3) et un élément de déplacement (17) monté de manière rotative sur la broche (16), sur le côté opposé de l'organe d'actionnement (3), en particulier un rouleau, une boule ou analogue, **en ce que** de préférence, l'élément de déplacement (17) repose sur la coulisse (15, 15') au moyen de la force élastique, et de manière davantage préférée, **en ce que** la force élastique est générée par un ressort de compression (18) agencé sur la broche (16).

4. Commutateur électrique selon la revendication 1, 2 ou 3, **caractérisé en ce que**, pour la position de repos de l'organe d'actionnement (3), chacun des flancs montants (19) des deux coulisses individuelles (15, 15') est utilisé, en particulier, **en ce que** l'élément de déplacement respectif (17) est en butée contre le flanc montant (19) correspondant.

5. Commutateur électrique selon l'une quelconque des revendications 1 à 4, **caractérisé en ce que** la trajectoire plane (20) du flanc montant (19) est opposée à un flanc de nouveau raide (23), de préférence **en ce que** les transitions entre la trajectoire plane (20) et les flancs (19, 21, 22, 23) sont respectivement arrondies et, de manière davantage préférée, **en ce que** les deux coulisses (15, 15') sont disposées en miroir l'une par rapport à l'autre, approximativement par rapport au centre de la trajectoire plane (20).

6. Commutateur électrique selon l'une quelconque des revendications 1 à 5, **caractérisé en ce qu'**il est prévu un boîtier (2), de préférence, **en ce que** l'organe d'actionnement (3) est monté mobile dans et/ou sur le boîtier (2), et de manière davantage préférée, **en ce que** l'organe d'actionnement (3) agit en position de commutation sur le système de contact (6, 7) au moyen d'un poussoir (9), une base (10) ou analogue.

7. Commutateur électrique selon l'une quelconque des revendications 1 à 6, **caractérisé en ce que** le système de contact (6, 7) est agencé sur une carte de circuit imprimé (11), de préférence **en ce que** la carte de circuit imprimé (11) est située dans le boîtier (2) et de manière davantage préférée, **en ce qu'**un connecteur électrique (8) est agencé sur la carte de circuit imprimé (11) pour transmettre les signaux de commutation générés lors de la commutation du système de contact (6, 7), en particulier le connecteur (8) faisant saillie du boîtier (2) pour la connexion d'un connecteur.

8. Commutateur électrique selon l'une quelconque des revendications 1 à 7, **caractérisé en ce que** le système de contact (6) comporte au moins une surface de contact (12) sur la carte de circuit imprimé (11) en tant que contact fixe ainsi qu'un contact de commutation (13) coopérant avec le contact fixe (12), en particulier de type d'un tapis de commutation, et/ou comporte un élément de commutation électrique (7) agencé sur la carte de circuit imprimé (11), en particulier un microrupteur, un interrupteur à action instantanée ou analogue.
